(19) Europäisches Patentamt
European Patent Office
Office européen des brevets

(11) EP 2 694 831 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**09.10.2024 Patentblatt 2024/41**

(45) Hinweis auf die Patenterteilung:
**12.06.2019 Patentblatt 2019/24**

(21) Anmeldenummer: **12718593.2**

(22) Anmeldetag: **04.04.2012**

(51) Internationale Patentklassifikation (IPC):
***F16C 33/60*** (2006.01) ***F16C 33/78*** (2006.01)
***F03B 11/06*** (2006.01) ***F03B 13/10*** (2006.01)
***F03B 11/00*** (2006.01) ***F03B 17/06*** (2006.01)
*F16C 33/66* (2006.01) *F16C 19/38* (2006.01)

(52) Gemeinsame Patentklassifikation (CPC):
**F03B 13/10; F03B 11/006; F03B 11/06; F03B 17/061; F16C 33/60; F16C 33/7896;**
F05B 2240/57; F05B 2260/40; F16C 19/381; F16C 33/6622; F16C 2300/14; F16C 2360/00; Y02E 10/20; Y02E 10/30

(86) Internationale Anmeldenummer:
**PCT/EP2012/001488**

(87) Internationale Veröffentlichungsnummer:
**WO 2012/136358 (11.10.2012 Gazette 2012/41)**

(54) **DREHVERBINDUNG FÜR UNTERWASSERBETRIEB SOWIE DAMIT AUSGERÜSTETE ANLAGE ZUR ENERGIEGEWINNUNG AUS WASSERKRAFT**

ROTARY JOINT FOR UNDERWATER OPERATION AND SYSTEM EQUIPPED THEREWITH FOR GENERATING ENERGY FROM WATERPOWER

JOINT TOURNANT POUR UTILISATION SOUS L'EAU ET INSTALLATION DE PRODUCTION D'ÉNERGIE HYDRAULIQUE ÉQUIPÉE D'UN TEL JOINT TOURNANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2011 DE 102011016185**

(43) Veröffentlichungstag der Anmeldung:
**12.02.2014 Patentblatt 2014/07**

(73) Patentinhaber: **IMO Holding GmbH**
**91350 Gremsdorf (DE)**

(72) Erfinder:
- **SCHRÖPPEL, Werner**
  **90530 Wendelstein (DE)**
- **FRANK, Hubertus**
  **91351 Höchstadt (DE)**
- **HOFMANN, Georg**
  **91346 Wiesenthal (DE)**

(74) Vertreter: **Schmidt, Steffen J. et al**
**Wuesthoff & Wuesthoff**
**Patentanwälte und Rechtsanwalt PartG mbB**
**Schweigerstrasse 2**
**81541 München (DE)**

(56) Entgegenhaltungen:
**EP-A1- 1 223 359** **WO-A1-2008/058729**
**WO-A1-2009/049755** **DE-A1- 3 151 277**
**DE-A1- 3 927 077** **DE-A1- 4 142 313**
**DE-U1- 202006 020 465** **FR-A1- 2 749 357**
**JP-A- 2008 032 148** **US-A- 4 798 481**
**US-A- 4 861 171** **US-A1- 2009 324 153**

Bemerkungen:
Die Akte enthält technische Angaben, die nach dem Eingang der Anmeldung eingereicht wurden und die nicht in dieser Patentschrift enthalten sind.

EP 2 694 831 B2

## Beschreibung

Die Erfindung richtet sich auf eine Drehverbindung für Unterwasserbetrieb mit einem ersten ringförmigen Anschlusselement und mit einem zweiten, ebenfalls ringförmigen Anschlusselement, welches konzentrisch zu dem ersten Anschlusselement angeordnet und diesem gegenüber verdrehbar ist, ferner mit einem zwischen den beiden Anschlusselementen angeordneten Ringspalt sowie mit wenigstens einer Reihe von entlang von je einer Laufbahn an dem ersten und an dem zweiten Anschlusselement abrollenden Wälzkörpern, wobei zur Abdichtung des Ringspalts eine Dichtungseinrichtung vorgesehen ist mit wenigstens einem Dichtungsring, der an dem ersten Anschlusselement der Drehverbindung festgelegt ist und eine rundumlaufende Dichtlippe oder -fläche aufweist, die an einer Anlauffläche entlang läuft, sowie eine Anlage zur Energiegewinnung aus Wasserkraft, umfassend wenigstens eine solche Drehverbindung für Unterwasserbetrieb.

Mehr als die Hälfte der Erdoberfläche ist mit Wasser bedeckt. Auf und unter dem Wasser liegen daher noch viele ungenutzte Ressourcen, seien dies Bodenschätze, Wasserkraft oder Transportwege. Bei der Nutzung dieser Ressourcen ist High-Tech unerläßlich, sei dies in Form von Bohrinseln, Gezeitenkraftwerken, Schiffen, etc. Sofern hierbei ein Energieaustausch mit dem Wasser stattfindet, bspw. antreibend wie bei Schiffen oder angetrieben wie bei Gezeitenkraftwerken, so erfordert dies im Allgemeinen eine RelativBewegung zwischen verschiedenen Maschinen- oder Anlagenteilen, welche sich im Wasser befinden, bspw. Propeller oder Impeller von Schiffen, Repeller von Gezeitenkraftwerken, etc. Dabei stellt sich stets das Problem, die gegeneinander bewegten Teile aneinander abzudichten.

Sofern dabei eine möglichst hundertprozentige Dichtung gewünscht wird, so ist dies zumeist nur mit hohen Anpreßkräften möglich. Dies wiederum führt zu einer hohen Reibung und damit zu einem hohen Verschleiß, wodurch die Wartungsintervalle und insbesondere auch die Betriebsdauer verkürzt werden. Oftmals werden dabei auch die Anlaufflächen der Dichtungen in Mitleidenschaft gezogen, so dass die Wartungsarbeiten nicht auf den Austausch einer Dichtung beschränkt sind, sondern sogar den Austausch ganzer Anlagenteile erfordern.

Die EP 1 223 359 A1 offenbart einen Unterwassergenerator mit einem Gehäuse im Wasserstrom mit einer Turbinenwelle. Die Welle mündet über eine Dichtbuchse zur Turbine hin, die mindestens zwei Dichtlippen gegen die Welle aufweist. Der Spalt zwischen den Dichtlippen ist mit Fett von einem zentralen Schmiersystem gefüllt, das auch das Lager schmiert. Dort sind jedoch an dem Wälzlager keinerlei Dichtungsringe festgelegt, weder an dessen radial außen liegendem, ringförmigen Anschlusselement noch an dessen radial innen liegendem, ringförmigen Anschlusselement, sodass für die Dichtung ein zusätzlicher Aufwand zu treiben ist.

Die US 4,798,481 offenbart einen Wälzlagerdrehkranz mit zwei zueinander konzentrischen Lagerringen, zwischen denen Wälzkörper rollen, wobei ein Lagerring eine Dichtung in gleitendem Eingriff mit einer zylindrischen Dichtkontaktfläche am anderen Lagerring aufweist, und wobei die Dichtungskontaktfläche ein endliches Band aus einem verschleißfesten Material ist, das an einer Haltefläche des Lagerrings befestigt ist. Demnach ist dort die Anlauffläche kein Ring, sondern ein endliches Band, dessen Enden zusammengebogen sind, sich aber nicht berühren, sondern durch einen Spalt voneinander getrennt sind. Durch die Unebenheit an der Stoßstelle ist ein verstärkter Verschleiß der Dichtungslippe vorprogrammiert.

Die US 2009/0324153 A1 betrifft ein Element zum Skalieren zweier gegeneinander verdrehbarer Teile, wobei das Element mindestens einen ersten Dichtungsring aus einem dauerelastischen Material aufweist, der an einem der beiden drehbaren Teile festgelegt ist und mindestens eine Dichtlippe aufweist. Dabei ist jedoch kein Anschlusselement unterteilt, insbesondere nicht entlang einer Ebene. Vielmehr gibt es zwischen dem Metallstreifen, welcher die Anlauffläche aufweist, und dem eigentlichen Anschlusselement weder eine Berührungsfläche noch eine ebene Trennungsfläche oder -fuge.

Die DE 41 42 313 A1 offenbart ein Stahl-Radial- oder Axialwälzlager, welches eine Korrosionsschutzbeschichtung aus einer galvanischen Zinklegierung zumindest auf den Laufbahnen aufweist. Die Korrosionsschutzbeschichtung besteht aus Zink-Eisen-, Zink-Nickel- oder Zink-Kobalt-Legierung mit einer Dicke von 0,1 - 3,0 $\mu$m. Auch hier ist kein Anschlusselement unterteilt, insbesondere nicht entlang einer Ebene. Ein zusätzlicher Anlaufring ist nicht erkennbar.

Die WO2009/049755 A1 beschreibt ein radial und axial belastbares Wälzlager, insbesondere ein zweireihiges Kegelrollenlager, bestehend aus mindestens drei Lagerringen, insbesondere einem Laschenring, einem Stützring und einem Haltering und dazwischen angeordneten Wälzkörpern, die mittels eines Käfigs geführt sind. Dabei sind zur axialen Abdichtung integrierte Wellendichtringe oder andere Dichtungselemente in den Lagerringen angeordnet oder zwischen den Lagerringen mittels Klemmringen oder anderen Strukturelementen festgelegt.

Bei der JP 2008/032 148 A handelt es sich um ein Wälzlager, das mit einem Innenring als drehseitigem Laufring versehen ist, und mit einem äußeren Ring als stationärem Laufring. Zwischen dem Innenring und dem Außenring ist eine Vielzahl von Kegelrollen angeordnet. Ein Dichtungselement mit einer ringförmigen Dichtlippe liegt an dem Innenring an; ein Ringteil dient der Einstellung der Druckkraft der Dichtlippe auf den Innenring und ist am Außenring fixiert.

Bei den vorgenannten Dokumenten WO 2009/049 755 A1 und JP 2008 032 148 A gibt es keinen gesonderten Anlaufring; vielmehr ist jeweils ein Anschlusselement in zwei Laufbahnringe unterteilt; weil das jeweils andere Anschlusselement als sog. Nasenring ausgebildet ist und der Zusammenbau daher die Unterteilung des die Nase umgreifenden Anschlusselements erfordert.

Aus den Nachteilen des beschriebenen Standes der Technik resultiert das die Erfindung initiierende Problem, eine gattungsgemäße Drehverbindung für Unterwasserbetrieb derart weiterzubilden, dass die Wartungsarbeiten möglichst gering sind.

Die Lösung dieses Problems gelingt durch die Drehverbindung nach Patentanspruch 1.

Durch diese Maßnahme werden die Wartungsarbeiten bei einer verschlissenen Anlauffläche darauf beschränkt, den betreffenden Anlaufring auszutauschen, während der benachbarte Laufbahnring an Ort und Stelle verbleiben kann. Da der Anlaufring keine tragende Funktion erfüllt, kann von einer Demontage der gesamten Drehverbindung abgesehen werden, wenn während des Austauschs der Dichtung das Eindringen von Wasser anderweitig unterbunden wird, bspw. indem das von der Drehverbindung getragene Anlagenteil zu den Wartungsarbeiten aus dem Wasser gehoben wird, bspw. innerhalb eines Trockendocks.

Ferner ist das dem Nasenring gegenüber liegende Anschlußelement unterteilt ist in wenigstens zwei Laufbahnringe, welche gemeinsam den rundum laufenden Bund des Nasenrings umgreifen. Diese Unterteilung erlaubt den Zusammenbau mit dem Nasenring, dessen rundum laufender Bund umgriffen werden sollte. Da das zweite Anschlußelement bereits unterteilt ist in Laufbahnring und Anlaufring, empfiehlt es sich, den dortigen Laufbahnring mit einem rundum laufenden Bund zu versehen und als Nasenring auszubilden und das erste Anschlußelement zu unterteilen, um einen Zusammenbau mit dem Nasenring zu ermöglichen. Bevorzugt sind die beiden aneinander gefügten Laufbahnringe miteinander verschraubt, insbesondere mittels zu der Drehachse parallele Befestigungsbohrungen durchgreifender Schrauben. Das solchermaßen geteilte erste Anschlußelement kann im Bereich der Stoßfuge zwischen seinen beiden Laufbahnringen abgedichtet sein, damit auch im Bereich dieser Stoßfuge kein Wasser durchsickern kann. Diese Dichtung kann vergleichbar ausgebildet sein wie die Dichtung zwischen Laufbahnring und Anlaufring des zweiten Anschlußelements, also mittels die Befestigungsbohrungen umgebender Dichtringe.

Die Erfindung zeichnet sich weiterhin aus durch eine Anlage zur Energiegewinnung aus Wasserkraft, umfassend wenigstens eine Drehverbindung nach Patentanspruch 1.

Es hat sich gezeigt, dass die Erfindung gerade in Wasserkraftwerken mit Vorteil eingesetzt werden kann, welche vom Wasser angetriebene Repeller aufweisen, wie bspw. Gezeitenkraftwerke. Andererseits kann die Erfindung natürlich auch in Verbindung mit antreibenden Propellern von Schiffen eingesetzt werden, auch im Rahmen von Impellern, d.h., von einem ring- oder röhrenförmigen Gehäuse umgebenen Propellern. Dies betrifft im Grunde genommen alle Arten von Schiffsantriebs- und/oder -steueranlagen, bspw. auch Bug- oder Heckquerstrahlruder oder sonstige Schiffs-Jetantriebe.

Es hat sich als günstig erwiesen, dass der Anlaufring aus einem Material mit dem selben Standardpotential bzw. Redoxpotential E° besteht wie der Laufbahnring, insbesondere aus dem selben Material wie letzterer. Dadurch ist sichergestellt, dass es keine Kontaktkorrosion gibt, wenn sich die verschiedenen Ringe berühren. Dies ist gerade wegen der großen Nähe von Feuchtigkeit von besonderer Bedeutung.

Aus anderen technischen Aspekten kann es vorteilhaft sein, Anlaufringe und Laufbahnringe aus unterschiedlichen Materialien zu fertigen, bzw. diese zumindest teilweise damit zu überziehen. In diesem Fall sind die Redoxpotentiale E° im Allgemeinen verschieden. Derartige Ausführungsformen können unter Anderem dann sinnvoll sein, wenn die Dichtungseigenschaften ausreichend sind, um der Ausbildung von Lokalelementen unter Einwirkung von Feuchtigkeit entgegen zu wirken.

Erfindungsgemäß besteht der Anlaufring aus einem anderen Material als der Laufbahnring. Dabei besteht der Anlaufring aus einem rostfreien Edelstahl, der eine spontane Passivierungsschicht ausbildet. Bspw. erhält Stahl mit einem Massenanteil von wenigstens 10,5 % oder besser 12 % Massenanteil nichtrostende Eigenschaften, insbesondere wenn der Chromanteil im austenitischen oder ferritischen Mischkristall gelöst ist. Durch diesen hohen Chromanteil bildet sich an der Oberfläche des Anlaufrings spontan eine schützende und dichte Passivierungsschicht aus Chromoxid aus, wodurch die weitere Oxidation verhindert wird. Wird diese Oxidschicht beschädigt, gelangt blankes Metall in Kontakt mit der Atmosphäre und es bildet sich automatisch wieder eine neue passivierende Schicht, d. h. die Schicht ist selbstheilend. Weitere Legierungsbestandteile - bspw. Nickel, Molybdän, Mangan und/oder Niob können die Korrosionsbeständigkeit eventuell noch weiter steigern. Bei manchen Metallen ist jedoch die spontane Passivierung weniger stark ausgeprägt, und in diesen Fällen sollte die Passivierungsschicht durch ein definiertes Verfahren aktiv erzeugt werden. Hierunter fällt z. B. die Eloxierung von Aluminium. Rostfreier Edelstahl hat jedoch darüber hinaus eine hohe mechanische Stabilität und ist daher oftmals für den Anlaufring zu bevorzugen. Aufgrund dessen begrenzten Querschnitts sind ggf. materialbedingte Mehrkosten vertretbar.

Gerade der Anlaufring sollte edler sein als der Laufbahnring oder zumindest rostfreie Eigenschaften aufweisen, da ersterer mit eventuell eintretender Feuchtigkeit eher in Kontakt gerät und somit durch die räumliche Nähe zum Wasser stärker korrosionsgefährdet ist. Im Übrigen sollte der Dichtungs-Anlaufring chemisch möglichst stabil sein, um eine hohe Betriebsdauer der Dichtung zu gewährleisten.

Erfindungsgemäß weist der Anlaufring einen an dem Laufbahnring flächig anliegenden Oberflächenbereich, insbesondere eine ebene Stirnseite, auf. Durch diesen Kontakt ist eine planparallele Anlage sichergestellt, was sich im Hinblick auf mögliche Unwuchten und davon ausgelöste Vibrationen günstig auswirkt.

Einem vergleichbaren Zweck dient ein rundum laufender Zentrierungsbund an dem Anlaufring oder an dem Laufbahnring, der in eine dazu querschnittlich komplementäre, rundum laufende Vertiefung des jeweils anderen Rings eingreift. Damit wird zusätzlich zu der planparallelen Lage auch noch eine konzentrische Relativausrichtung sichergestellt.

Erfindungsgemäß ist der Anlaufring an einem Laufbahnring angeflanscht, insbesondere mittels mehrerer Befestigungsschrauben. Durch diese Befestigungstechnik ist eine besonders intensive Vebindung zwischen beiden Ringen gewährleistet.

Zum Hindurchstecken von Befestigungsschrauben verfügt der Anlaufring über mehrere, kranzförmig über seinen Umfang verteilte Bohrungen in seiner Anlagefläche an dem Laufbahnring, welche rechtwinklig zu der Anlagefläche verlaufen, insbesondere parallel zu der Rotationsachse angeordnet sind sowie bevorzugt äquidistant über den Umfang verteilt sind; vorzugsweise handelt es sich hierbei um Durchgangsbohrungen.

Mit diesen Durchgangsbohrungen des Anlaufrings korrespondieren damit fluchtende Bohrungen in der anliegenden Fläche des Laufbahnrings; vorzugsweise handelt es sich hierbei um mehrere, kranzförmig über den Ringumfang verteilte Sacklochbohrungen mit Innengewinde zum Hineinschrauben von Befestigungsschrauben.

Andererseits mag in besonderen Fällen die Lage von Durchgangsbohrungen und Sacklochbohrungen mit Innengewinde genau vertauscht sein, oder es gibt nur Durchgangsbohrungen, so dass zur Befestigung Schrauben einerseits und Muttern andererseits verwendet werden.

Ferner sollten zwischen dem Anlaufring und wenigstens einem Laufbahnring eine oder mehrere Dichtungen vorgesehen sein, insbesondere Dichtringe. Diesen obliegt die Aufgabe, das Einsickern von Wasser entlang des Berührungsspalts zwischen Anlaufring und Laufbahnring zu verhindern. Ein solcher Ring kann bspw. in einer nutförmigen Vertiefung eines Rings eingelegt werden, insbesondere im Bereich der betreffenden Anlagefläche, wobei die Nut jedoch vorzugsweise einen kleineren Querschnitt aufweist als der darin aufzunehmende Dichtungsring, so dass jener gezwungen ist, sich beim Zusammenschrauben der beiden Ringe zu verformen. Aus dem dabei entstehenden Anpreßdruck folgt die eigentliche Abdichtungswirkung. Diese Abdichtung unterliegt keinem Verschleiß, da die betreffenden Ringe sich nicht gegeneinander bewegen.

Um das Einsickern von Wasser zu verhindern, kann vorgesehen sein, dass wenigstens ein Dichtring wenigstens eine Befestigungsbohrung umgibt. Auf diesem Weg können alle Befestigungsbohrungen einzeln abgedichtet werden, indem pro Befestigungsbohrung eine dazu etwa konzentrische Dichtung vorgesehen ist. Andererseits besteht auch die Möglichkeit, alle Befestigungsbohrungen durch zwei große Dichtringe abzudichten, welche parallel zum Ringumfang verlaufen, und zwar je ein derartiger Dichtungsring an jeder Seite des Kranzes von Befestigungsbohrungen, also einmal radial innerhalb dieses Kranzes und einmal radial außerhalb desselben.

Aneinander fügbare, ebene Stirnflächen an dem Anlauf- und dem Laufbahnring erlauben es, diese Ringe in axialer Richtung hintereinander zu reihen. Dabei sollte der Anlaufring an der dem Wasser zugewandten Außenseite des Lagers angeordnet sein, der Laufbahnring dagegen an der dem Wasser abgewandten Innenseite des Lagers, so dass die Dichtung im Bereich des Anlaufrings die dahinter befindlichen Wälzkörper und Laufbahnen vor Feuchtigkeit schützt.

Insbesondere bei einem Radiallager oder bei einem kombinierten Radial- und Axiallager sollte das erste Anschlußelement den Anlaufring und wenigstens einen Laufbahnring des zweiten Anschlußelements in axialer Richtung im Wesentlichen überdecken. In dem radial dazwischen liegenden Spalt finden dann sowohl die Wälzkörper als auch die Dichtungen Platz.

Mit großem Vorteil ist die Anlauffläche an einem konkav oder konvex gewölbten, insbesondere zylindermantelförmigen Oberflächenbereich des Anlaufrings angeordnet. Dies entspricht der üblichen Spaltgestalt eines Radiallagers oder eines kombinierten Radial- und Axiallagers.

Es hat sich bewährt, dass das erste Anschlußelement den Anlaufring und wenigstens einen Laufbahnring außen umgibt. Dadurch erhält die Anlauffläche eine zylindermantelförmige, konvexe Gestalt. Wie weiter unten ausgeführt wird, ist es konstruktiv einfacher, hohe Anpreßkräfte einer Dichtung gegenüber einer konvexen Anlauffläche zu erzeugen als gegenüber einer konkaven Anlauffläche.

Die Anlauffläche des Anlaufrings sollte gehärtet sein, vorzugsweise oberflächengehärtet. Diese Maßnahme erlaubt es, hohe Anpreßkräfte zu realisieren, ohne dass die Betriebsdauer der Anlauffläche darunter leidet.

Es liegt im Rahmen der Erfindung, dass wenigstens ein Dichtungsring in einer Auskehlung des ersten Anschlußelements aufgenommen ist. In einer solchen Auskehlung erfährt ein Dichtungsring eine optimale Führung, bspw. durch Anlage oder gar Anpressen an die Innenflächen der Auskehlung.

Die Erfindung läßt sich dahingehend weiterbilden, dass wenigstens ein Dichtungsring in axialer Richtung durch einen Klemmring in der Auskehlung des ersten Anschlußelements in axialer Richtung festgeklemmt ist. Damit läßt sich eine Dichtung komplett festlegen; sie ist an zwei Längskanten von der Auskehlung des ersten Anschlußelements umgeben, liegt mit ihrer dritten Längskante an der dafür vorgesehenen Anlauffläche an und wird an der verbleibenden, vierten Längskante von dem Klemmring umgriffen.

Die Erfindung bevorzugt, den Klemmring an einer Stirnseite des ersten Anschlußelements festzuschrauben, insbesondere an der die Auskehlung aufweisenden Stirnseite des ersten Anschlußelements. Mit mehreren, derartigen Schraubverbindungen, welche vorzugsweise über den Ringumfang äquidistant verteilt sind, lassen sich hohe Anpreßkräfte erzeugen, so dass die innen liegenden Dichtungsringe unverrückbar festgelegt sind und sich nicht mit dem Anlaufring mitdrehen, sondern an jenem trotz der dortigen, hohen Andruckkräfte entlang laufen.

Um eine derartige Verschraubung zu ermöglichen, sollte der Klemmring die Auskehlung des ersten Anschlußelements in radialer Richtung überdecken; in dem Überdeckungsbereich sind können dann die Verschraubungen angeordnet sein.

Bevorzugt läßt sich dem Querschnitt eines Dichtungsrings insgesamt etwa ein Viereck umbeschreiben, insbesondere etwa ein Rechteck oder gar ein Quadrat. Dies erlaubt es, eine rechtwinklige Auskehlung in dem ersten Anschlußelement vorzusehen sowie eine zylindermantelförmige Anlauffläche an dem Anlaufring und einen ebenen Klemmring.

Im Einzelnen sollte der Querschnitt wenigstens eines Dichtungsrings aber zwei Schenkel aufweisen, welche an einem Ende direkt oder über einen Steg miteinander verbunden sind. Dies trägt der Tatsache Rechnung, dass ein Dichtungsring mit zwei Anschlußelementen in Kontakt tritt; hierfür dient je ein Schenkel des Querschnitts, und die querschnittliche Einkerbung in dem Bereich dazwischen erhöht die Elastizität zwischen den beiden Kontaktbereichen des Dichtungsrings, begünstigt also den Ausgleich geringer radialer Relativbewegungen zwischen beiden Anschlußelementen. Eine bevorzugte Weiterbildung der Erfindung besteht darin, dass ein erster Querschnitts-Schenkel wenigstens eines Dichtungsrings eine etwa rechteckige Gestalt aufweist und dessen Verankerung an dem ersten Anschlußelement, insbesondere in dessen Auskehlung, dient. Die beiden zueinander etwa parallelen Stirnseiten dieses rückwärtigen, dem Anlaufring abgewandten, bevorzugt radial außen liegenden Querschnitts-Schenkels können von einer Stirnseite der Auskehlung einerseits und von dem Klemmring andererseits her, also etwa in axialer Richtung, Klemmkräfte aufnehmen und erlauben daher einen hohen Reibschluß.

Der andere Querschnitts-Schenkel wenigstens eines Dichtungsrings sollte an seiner dem ersten Querschnitts-Schenkel abgewandten Seite eine Dichtlippe aufweisen, vorzugsweise an oder in der Nähe seines freien Endes. Dieser dem Anlaufring zugewandte Querschnitts-Schenkel stellt den drehbeweglichen Kontakt zu dem Anlaufring her und verfügt zu diesem Zweck über eine Dichtlippe mit verjüngtem Querschnitt; dieser Querschnittsbereich hat infolge seiner kontinuierlichen Querschnittsverjüngung eine leichtere Verformbarkeit und kann sich daher insbesondere infolge hoher Anpreßkräfte optimal und damit in hohem Maße dicht an die betreffende Anlauffläche anschmiegen, während gleichzeitig die Reibung infolge des verjüngten Kontaktbereichs so weit als möglich reduziert ist.

In dem Bereich zwischen den beiden Querschnitts-Schenkeln läßt sich ein rundum laufender Spanndraht anordnen, der die Rückseite des die Dichtlippe aufweisenden Querschnitts-Schenkels umgreift und dessen Dichtlippe fest gegen die Anlauffläche des Anlaufrings preßt. Mit einem solchen Spanndraht kann die Anpreßkraft der Dichtlippe radial nach innen gegen die Anlauffläche erheblich gesteigert werden.

Indem wenigstens ein Dichtungsring derart angeordnet ist, dass der Schlitz bzw. die Einkerbung zwischen den beiden Querschnitts-Schenkeln zu der äußeren Seite bzw. dem Wasser hin offen ist, kann der Wasserdruck innerhalb der Einkerbung zwischen beiden Querschnitts-Schenkeln dazu benutzt werden, um diese Schenkel zusätzlich auseinander zu drücken. Damit wird die Dichtwirkung bei zunehmendem Wasserdruck automatisch erhöht, so dass eine solche Dichtung selbst in größeren Wassertiefen verwendet werden kann. Eine solche Anordnung sollte vor allem bei einem äußersten, dem Wasser direkt zugewandten Dichtelement gewählt werden, sowie ggf. bei mehr als zwei Dichtungsringen auch noch bei einem zweiten oder gar dritten Dichtungsring, von außen her gezählt.

Andererseits kann in ähnlicher Form ein innerster Dichtungsring genau umgekehrt eingebaut werden, also derart, dass der Schlitz bzw. die Einkerbung zwischen den beiden Querschnitts-Schenkeln zu den Wälzkörpern bzw. Laufbahnen hin offen ist. Sofern dabei ein dortiges Schmiermittel unter Druck gesetzt wird, kann dieser Druck über die betreffende Einkerbung die beiden Querschnitts-Schenkel auseinander drücken und damit die Dichtwirkung zusätzlich erhöhen, so dass das Schmiermittel nicht entweichen kann.

Erfindungsgemäß lassen sich mehrere Dichtungsringe vorsehen, wobei zwei benachbarte Dichtungsringe durch je ein vorzugsweise ringförmiges, insbesondere scheibenförmiges Abstandselement voneinander getrennt sind. Diese Abstandselemente können den Anpreßdruck eines Klemmrings gleichmäßig über den gesamten Umfang verteilen und dadurch die Lage der einzelnen Dichtringe sowie deren Abdichtwirkung optimieren.

Sofern ein derartiges, vorzugsweise ring- und/oder scheibenförmiges Abstandselement aus einem steifen Material besteht, vorzugsweise aus Metall, Keramik oder Kunststoff, kann es diese Aufgabe, die Klemmkräfte innerhalb der betreffenden Fläche gleichförmig zu verteilen, am besten erfüllen.

Ein solches Abstandselement kann wenigstens einen, etwa in radialer Richtung verlaufenden Kanal aufweisen, bspw. wenigstens eine etwa radial verlaufende Durchgangsbohrung. Durch eine solche Bohrung ist ein Zugang zu einer Kammer zwischen zwei Dichtringe geschaffen, und im Bedarfsfall kann daher mit geringstem Aufwand ein Schmiermittel in die betreffende Kammer gepreßt werden.

Der Zuführung von Schmiermittel dient ferner eine Weiterbildung der Erfindung, wonach ein Abstandselement an wenigstens einem gewölbten Umfangsbereich eine rundum laufende Nut aufweist, vorzugsweise an seinem dem ersten Anschlußelement zugekehrten Umfang. Über diese rundum laufende Nut kann ein zugeführtes Schmiermittel mittels Druck zuverlässig zu einem oder mehreren Radialkanälen geführt werden.

Ebenfalls zum Zwecke der Schmierung sollte das erste Anschlußelement wenigstens eine Schmiermittelbohrung aufweisen, insbesondere auf Höhe eines oder mehrerer Abstandselemente je eine Schmiermittelbohrung. Über diese Schmiermittelbohrung(en) gelangt das Schmiermittel sodann in den Bereich der Radialkanäle und von dort weiter durch das betreffende Abstandselement direkt bis in eine Kammer zwischen zwei Dichtungsringen.

Für eine erfindungsgemäße Abdichtung erscheint im Allgemeinen Fett als Schmiermittel besser geeignet als Schmieröl, da Schmierfett aufgrund seiner dickeren Konsistenz sich nicht mit Wasser mischen kann.

Obzwar - insbesondere bei Radiallagern - auch Ausführungsformen mit nur einer einzigen Reihe von Wälzkörpern, insbesondere Kugeln, denkbar sind, dürfte im Allgemeinen den Ausführungsformen mit mehreren Reihen von Wälzkörpern der Vorzug zu geben sein, weil dadurch die Tragfähigkeit erhöht wird, so dass - gerade bei Großlagern mit einem Durchmesser von 1 Meter oder mehr - größere und vor allem auch schwerere Anlagenteile stabilisiert werden können.

Den selben Zweck verfolgt eine Weiterbildung der Erfindung, wonach wenigstens eine Reihe von rollenförmigen, tonnenförmigen, kegelförmigen oder nadelförmigen Wälzkörpern vorgesehen ist. Aufgrund ihres linienhaften Berührungsbereichs mit den betreffenden Laufbahnen haben derartige Wälzkörper im Allgemeinen eine größere Tragkraft als kugelförmige Wälzkörper mit jeweils nahezu punktförmigen Berührungsbereichen mit den betreffenden Laufbahnen.

Als besonders tragfähig hat sich eine Ausführungsform erwiesen, bei der wenigstens ein Anschlußelement als sog. Nasenring ausgebildet ist mit einem dem Ringspalt zugekehrten Bund, an welchem eine oder mehrere Laufbahnen für daran entlang rollende Wälzkörper angeordnet sind. Ein solcher Nasenring bietet mit seiner Ober- und Unterseite die Möglichkeit, für beide axialen Belastungsrichtungen - Zug und Druck - jeweils eine axiale Wälzkörperreihe mit rollen-, tonnen-, kegel- oder nadelförmigen Wälzkörpern anzuordnen, so dass sich eine maximale axiale Kraftübertragung in beiden Kraftrichtungen erzielen läßt.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1 ein Gezeitenkraftwerk in einer perspektivischen Ansicht; sowie

Fig. 2 einen Schnitt quer durch die Ringe eines Wälzlagers für drehbewegliche Teile des Gezeitenkraftwerks aus Fig. 1, insbesondere für die Lager zur Verstellung des Anstellwinkels der Repellerblätter.

Fig. 1 zeigt beispielhaft einen Anwendungsfall für eine erfindungsgemäße Drehverbindung 1 für Unterwasserbetrieb, nämlich ein Gezeitenkraftwerk 2.

Dieses steht in einem ufernahen Bereich eines offenen Gewässers mit Tidenhub, bspw. eines Meeres 3 oder Ozeans. Von dem dortigen Meeresgrund 4 erhebt sich ein Turm 5, der mit seiner Spitze 6 aus dem Meer 3 ragt und dort eine Anlegestelle für Versorgungs- und/oder Wartungsschiffe bildet. Über ein nicht dargestelltes, auf dem Meeresgrund 4 verlaufendes Kabel wird der erzeugte Strom einem Spannungsnetz an Land zugeleitet.

Entlang des Turms 5 ist eine ring- oder manschettenförmige Tragvorrichtung 6 in vertikaler Richtung verstellbar, und zwar von der in Fig. 1 dargestellten Position unter Wasser bis zu einer nicht dargestellten Position oberhalb des Wasserspiegels 7.

Von dieser Tragvorrichtung 6 zweigen etwa diametral zueinander zwei etwa horizontale Streben 8 ab, die zur Reduzierung des Strömungswiederstandes einen langgestreckten Querschnitt ähnlich einem Flügel aufweisen können. An ihren freien Enden tragen diese beiden Streben 8 je eine Gondel 9, woran jeweils mindestens ein Repeller 10 von langgestreckter, etwa zigarrenförmiger Gestalt angeordnet ist.

Jeder Repeller 10 weist eine Nabe 11 auf, welche den vorderen, drehbeweglichen Teil der betreffenden Gondel 9 bildet. Von dieser Nabe aus erstrecken sich mehrere - im dargestellten Fall zwei, einander diametral gegenüber liegende - Repeller-Flügel 12 etwa radial zur Drehachse der Nabe 11 nach außen. Da diese Repeller-Flügel 12 zu der aktuellen Strömungsrichtung schräg angestellt sind, werden sie durch die Kraft des anströmenden Wassers angetrieben und zu einer Drehung um die Drehachse der Nabe veranlasst.

Dabei muß der Anstellwinkel der Repeller-Flügel 12 je nach der Geschwindigkeit des anströmenden Wassers verändert werden, um die Drehgeschwindigkeit der Repeller 10 in einem vorgegebenen Bereich zu halten. Deshalb sind die Flügel 12 mittels je einer Drehverbindung 1 an der Nabe 11 angeschlossen. Diesen Drehverbindungen 1 obliegt es nicht nur, eine Veränderung des Anstellwinkels zu ermöglichen, sondern sie müssen auch die Wasserdruckkraft und auch das von der Strömung verursachte Drehmoment auf die Nabe 11 übertragen; schließlich müssen sie auch dafür Sorge tragen, dass im Bereich der Drehverbindung 1 kein Wasser in die Nabe 11 oder die Gondel 9 eindringen kann.

Um diese Anforderungen zu erfüllen, wird die in Fig. 2 dargestellte Drehverbindung 1 verwendet.

Man erkennt dort eine ringförmige Anordnung, von der allerdings aus Platzgründen nur ein abgebrochener Schnitt quer durch den Ring dargestellt ist, während die Rotationsachse und der diametral gegenüber liegende Ringbereich rechts, weit jenseits des Blattrandes liegen.

Zu sehen sind ein erstes, ringförmiges Anschlußelement 13 und ein zweites ebenfalls ringförmiges Anschlußelement 14. Beide liegen etwa auf gleicher Höhe, radial ineinander, wobei sich in diesem Fall das zweite Anschlußelement 14 radial innerhalb des ersten Anschlußelements 13 befindet. Zwischen beiden Anschlußelementen 13, 14 gibt es einen rundum laufenden Spalt 15, welcher sich von den beiden unteren Stirnseiten 16, 17 der beiden Anschlußelemente 13, 14 bis zwischen dessen beiden oberen Stirnseiten 18, 19 erstreckt.

Im oberen Bereich der in Fig. 2 dargestellten Drehverbindung 1, welcher dem Innenraum der Nabe 11 zugewandt ist, also nahe der Stirnseiten 18, 19, befindet die eigentliche Lagerung 20, während im unteren Bereich, welcher dem Außenraum bzw. Meerwasser 3 zugewandt ist, also nahe den Stirnseiten 16, 17, eine Dichtung 21 vorgesehen ist.

Diese Dichtung 21 umfaßt eine Anzahl n von Dichtungsringen 22, in der dargestellten Ausführungsform deren drei, d.h. n = 3. Diese Dichtungsringe 22 sind in axialer Richtung, also in Richtung der Drehachse der Drehverbindung 1, hintereinander angeordnet.

Diese Dichtungsringe 22 haben vorzugsweise etwa gleiche oder zueinander spiegelsymmetrische Querschnitte, welche sich vorzugsweise jeweils etwa durch ein Quadrat umbeschreiben lassen. Sie verfügen jeweils über wenigstens eine rundum laufende Dichtlippe 23, der vorzugsweise der in Fig. 2 rechts außerhalb des Zeichenblattes zu denkenden Drehachse zugewandt ist, also radial nach innen gerichtet ist, sowie über einen dieser Dichtlippe 23 gegenüber liegenden Bereich 24, welcher ihrer Befestigung dient und vorzugsweise der Drehachse abgewandt ist, also den radial außen liegenden Umfang 25 eines Dichtungsrings 22 bildet und dessen Festlegung an einem Anschlußelement, bei der vorliegenden Ausführungsform an dem radial außen liegenden Anschlußelement 13, dient.

Zwecks eben dieser Festlegung weist dieses Anschlußelement 13 im Bereich des Übergangs von seiner dem Außenraum bzw. dem Meer 3 zugekehrten Stirnseite 16 zu dem Spalt 15 eine Auskehlung 26 auf. Diese Auskehlung 26 hat eine rechteckige, vorzugsweise längliche Gestalt. Im dargestellten Beispiel ist ihre zur Drehachse der Drehverbindung 1 parallele Erstreckung a etwa dreimal so lang oder vorzugsweise mehr als dreimal so lang wie die radiale Erstreckung r lotrecht zu der Drehachse der Drehverbindung. Im Allgemeinen gilt:

$$a \geq n * r,$$

wobei n die Anzahl der in die Auskehlung 26 einzulegenden Dichtungsringe 22 ist.

Ein Klemmring 27 dient zum axialen Festklemmen der Dichtungsringe 22 innerhalb der Auskehlung 26. Dieser Klemmring 27 deckt die Stirnseite der Auskehlung 26 im Bereich der daran angrenzenden Stirnseite 16 des betreffenden Anschlußelements 13 ab sowie einen daran anschließenden Teil 28 der Stirnseite 16 und ist dort mittels mehrere kranzförmig verteilt angeordneter, zur Drehachse der Drehverbindung 1 paralleler Schraubverbindungen 29 festgelegt. Der von dem kreisringförmigen Klemmring 27 abgedeckte, ebenfalls kreisringförmige Teil 28 der Stirnseite 16 ist gegenüber deren übrigem Bereich geringfügig eingesenkt. In dieser Einsenkung kann der Klemmring 27 exakt zentriert werden, so dass ein Auswuchten nicht erforderlich ist. Da die Dichtringe 22 elastisch sind, können die Schraubverbindungen 29 so weit fest gezogen werden, bis der Klemmring 27 bündig und reibschlüssig an dem eingesenkten Teil 28 der Stirnseite 16 anliegt. Solchenfalls sind die Dichtungsringe 22 geringfügig elastisch komprimiert und dadurch reibschlüssig und gegenüber dem Anschlußelement 13 unverdrehbar fixiert.

Die Dichtlippen 23 der Dichtungsringe 22 laufen an einer gemeinsamen Anlauffläche 30 des jeweils anderen Anschlußelements, hier des radial inneren Anschlußelements 14, an. Diese Anlauffläche 30 ist vorzugsweise gehärtet, damit der Verschleiß minimiert ist. Dennoch ergibt sich infolge hoher Andruckkräfte der Dichtlippen 23 ein nicht zu vernachlässigender Abrieb.

Um bei einer beschädigten Anlauffläche 30 nicht die gesamt Drehverbindung 1 erneuern zu müssen, ist das Anschlußelement 14 unterteilt in zwei Ringe, und zwar entlang einer von der Drehachse der Drehverbindung 1 etwa lotrecht durchsetzten Fläche, insbesondere Ebene 31. Die Unterteilungsebene 31 befindet sich etwa auf Höhe der inneren, radialen Begrenzungsfläche 32 der Auskehlung 26.

Von den beiden Teilringen trägt der in Fig. 2 untere an seiner dem Spalt 15 zugewandte, gewölbten Oberfläche die eigentliche Anlauffläche 30 für die Dichtlippen 23 der Dichtungsringe 22. Er wird deshalb im Folgenden als Anlaufring 33 bezeichnet.

Der andere Ring des Anschlußelements 14 befindet sich auf Höhe der Lagerung 20 und trägt eine oder - wie bei der dargestellten Ausführungsform - mehrere Laufbahnen 34, 35, 36 für daran entlang rollende Wälzkörper 37, 38, 39 und wird daher im Folgenden als Laufbahnring 40 bezeichnet.

Anlaufring 33 und Laufbahnring 40 liegen entlang der Unterteilungsebene 31 flächig aneinander an. Um die beiden Ringe 33, 40 leicht gegeneinander zentrieren zu können, ist an einem von beiden - hier an dem Anlaufring 33 - eine rundum laufende, bundartige Erhöhung 41 vorgesehen, die mit einem Pendant in Form einer querschnittlich etwa gleichen, rundum laufenden, nut- oder kehlenartigen Vertiefung 42 an dem jeweils anderen Ring - hier an dem Laufbahnring 40 - zusammenwirkt, indem sie darin eingreift und dabei für eine konzentrische Ausrichtung beider Ringe 33, 40 sorgt.

Die Vereinigung der beiden Ringe 33, 40 des betreffenden Anschlußelements 14 erfolgt mittels Schrauben, welche jeweils zwei miteinander fluchtende, zu der Drehachse der Drehverbindung 1 etwa parallele Bohrungen 43, 44 in beiden Ringen 33, 40 durchgreift. Vorzugsweise ist dabei eine Bohrung 43 in dem Anlaufring 33 als Durchgangsbohrung ausgebildet, während eine damit fluchtende Bohrung 44 in dem Laufbahnring 40 vorzugsweise als mit Innengewinde versehene Sacklochbohrung ausgebildet ist. Ggf. könnte dies natürlich auch genau umgekehrt sein. Sofern die von Durchgangsbohrungen 43 durchsetzte, freie Stirnseite 17 des betreffenden Rings 33, 40 gleichzeitig als Anschlußfläche zum Anschluß eines Anlagen- oder Maschinenteils oder Fundaments od. dgl. dient, können die Bohrungen 43, 44 gleichzeitig auch zur Verbindung des betreffenden Anschlußelements 14 mit dem betreffenden Anlagen- oder Maschinenteil oder Fundament dienen.

Damit entlang der Unterteilungsebene 31 keine Feuchtigkeit in die Drehverbindung 1 oder gar in das Gezeitenkraftwerk 2 eindringen kann, sind die jene Unterteilungsebene 31 durchsetzenden Bohrungen 43, 44 abgedichtet. Hierzu dienen Dichtungsringe 45, welche zwischen den beiden, entlang der Unterteilungsebene 31 zusammen treffenden Stirnflächen verlaufen und bevorzugt in je eine nutförmige Vertiefung 46 in einer dieser Stirnseiten eingelegt sind. Bevorzugt ist jedes Paar miteinander fluchtender Bohrungen 43, 44 von einer derartigen, ringförmigen Dichtung 45 umgeben. Es wäre allerdings auch möglich, stattdessen nur zwei Dichtungsringe zu verwenden, welche an einem dem betreffenden Kranz von Bohrungen einbeschriebenen Kreis einerseits sowie an einem dem betreffenden Kranz von Bohrungen umbeschriebenen Kreis andererseits entlang laufen.

Die Anordnung gemäß Fig. 2 ist absichtlich derart getroffen, dass sich der Anlaufring 33 radial innerhalb der Dichtungsringe 22 befindet, denn daraus folgen weitere Vorteile:

Wie Fig. 2 erkennen läßt, haben die Dichtungsringe 22 jeweils einen etwa U-förmigen oder V-förmigen Querschnitt, mit zwei Schenkeln 24, 47, die entlang eines Stegs 48 miteinander verbunden sind, während die Schenkel 24, 47 in dem Querschnittsbereich jenseits des Stegs 48 durch einen Schlitz 49 voneinander getrennt sind. Im Querschnitt weist dieser Schlitz eine Längsrichtung auf, welche zu der Drehachse der Drehlagerung 1 parallel verläuft.

Während der der Anlauffläche 30 abgewandte Schenkel 24 der Festlegung des betreffenden Dichtungsrings 22 in der Auskehlung 26 des äußeren Anschlußelements 13 dient, trägt der andere Schenkel an seiner der Anlauffläche 30 zugewandten Außenseite die eigentliche Dichtlippe 23, die sich etwa auf halber Höhe des betreffenden Dichtungsrings 22 befindet. Die Dichtlippe 23 kann auch als Dichtungsfläche ausgebildet sein, die mit der Anlauffläche 30 anstelle eines linienhaften Berührungsbereichs einen etwa flächenhaften Berührungsbereich ausbildet.

An der dem Schlitz 49 zugewandten Innenfläche 50 des die Dichtlippe 23 aufweisenden Schenkels 47 ist eine etwa rillenförmige, umlaufende Vertiefung vorgesehen zur Aufnahme eines rundum laufenden Spanndrahtes 51. Wenn dieser gespannt wird, so wird dadurch der die Dichtlippe 23 aufweisende Schenkel 47 des Dichtungsrings 22 radial nach innen gezogen in Richtung zu der Anlauffläche 30. Damit lassen sich sehr hohe Anpreßdrücke zwischen Dichtlippe 23 oder Dichtungsfläche einerseits und Anlauffläche 30 andererseits erzeugen.

Wie man aus der Zeichnung weiter entnehmen kann, liegen die einzelnen Dichtungsringe 22 nicht direkt aneinander bzw. an dem Klemmring 27 an, sondern dazwischen befindet sich jeweils noch ein Abstandsring 52. Da die Dichtungsringe 22 selbst hinreichend elastisch ausgebildet sind, können die Abstandsringe 52 aus einem härteren bzw. inelastischeren Material bestehen, bspw. aus Metall, Keramik oder Kunststoff. Da diese Abstandsringe 52 wie auch die Dichtungsringe 22 unverdrehbar an dem die Auskehlung 26 aufweisenden Anschlußelement 13 festgelegt sind, werden sie bevorzugt auch an jenem zentriert. Zu diesem Zweck entspricht ihr Außendurchmesser möglichst exakt dem Innendurchmesser der Auskehlung 26, während ihr Innendurchmesser bevorzugt etwas größer ist als der Außendurchmesser der Anlauffläche 30, so dass dazwischen keine Reibung erzeugt wird.

Die Abstandsringe 52 haben einen rechteckigen Querschnitt mit liegender Längsachse und haben also eine etwa scheibenförmige Geometrie. Deshalb und wegen ihrer höheren Festigkeit sind sie in der Lage, die Anpreßdrücke zwischen benachbarten Dichtungsringen 22 über die betreffende Berührungsfläche etwa gleichmäßig zu verteilen. Indem sie darüber hinaus den Abstand zwischen den einzelnen Dichtungsringen 22 erhöhen, schaffen sie im Bereich der Anlauffläche 30 jeweils Kammern 53 zwischen den Dichtlippen 23 oder -bereichen benachbarter Dichtungsringe 22, die bevorzugt mit Schmiermittel befüllt werden, um einen Gegendruck zu dem umgebenden Wasserdruck aufzubauen und dadurch die Gefahr des Eindringens von Wasser weiter zu reduzieren. Als Schmiermittel wird Schmierfett empfohlen, weil sich Schmierfett aufgrund seiner anderen Konsistenz grundsätzlich nicht mit Wasser vermischen kann; allerdings wäre auch Schmieröl denkbar.

Um jede Kammer 53 getrennt mit Schmiermittel versorgen zu können, weist jeder Abstandsring 52 wenigstens einen etwa radial verlaufende Schmierkanal 54 auf. Am Außenumfang des Abstandsrings 52 münden alle Schmierkanäle 54 in einen rundum laufenden Kanal 55. Dieser befindet sich etwa auf Höhe wenigstens je eines Schmierkanals 56 in dem die Auskehlung 26 aufweisenden Anschlußelement 13 und erstrecken sich von der gewölbten Innenseite eben dieser Auskehlung 26 radial bis zu der gegenüber liegenden Mantelfläche 57 des betreffenden Anschlußelements 13. Im Bereich der dortigen Mündungen ist jeweils ein Anschluß 58 für einen Schmiernippel od. dgl. vorgesehen.

Ein weiterer, derartiger Schmierkanal 59 führt direkt bis zum Spalt 15. Zwischen dem dadurch mit Schmiermittel versorgten Bereich des Spalts 15 und der Dichtung 21 kann sich wenigstens eine weitere, innere Dichtung 60 befinden.

Von dieser (-en) Dichtung(en) 21, 60 vor Feuchtigkeit geschützt befindet sich im oberen Bereich der Drehverbindung 1 die eigentliche Lagerung 20. Diese ist im vorliegenden Beispiel als dreireihige Rollenlagerung ausgebildet mit rollenförmigen Wälzkörpern 37, 38, 39.

Deren Laufbahnen 34, 35, 36 des Laufbahnrings 40 befinden sich allesamt an einem in Richtung des Spaltes 15 vorspringenden Bund 61 desselben, der obgleich seines rechteckigen Querschnitts von Fachleuten üblicherweise als Nase bezeichnet wird und daher dem solchermaßen ausgestalteten Laufbahnring 40 auch den Beinamen Nasenring eingebracht hat. An der Ober- und Unterseite des Bundes 61 bildet je eine Laufbahn 34, 35, die dritte Laufbahn 36 befindet sich an dem Außenumfang des Bundes 61.

Da sich der Bund 61 des Laufbahnrings 40 in den Spalt 15 hinein erstreckt, muß das gegenüber liegende - hier das äußere - Anschlußelement 13 entsprechend zurückweichen, um Platz für Bund 61 und Wälzkörper 37, 38, 39 zu schaffen. Da der Bund 61 im fertiggestellten Zustand von dem betreffenden Anschlußelement 13 von beiden Axialrichtungen - also von oben und von unten - umgriffen wird, ist es zur Erleichterung des Zusammenbaus erforderlich, dass das den Bund 61 umgreifende Anschlußelement 13 entlang einer von der Drehachse der Drehlagerung 1 etwa lotrecht durchdrungenen Fläche oder Ebene 62 unterteilt ist.

Demnach besteht bei dieser Ausführungsform auch das die Auskehlung 26 aufweisende Anschlußelement 13 unterteilt in zwei Ringe. Da in diesem Fall jedoch jeder dieser beiden Ringe wenigstens eine Laufbahn 63, 64, 65 aufweist, sollen diese beiden im Folgenden als oberer Laufbahnring 66 und als unterer Laufbahnring 67 bezeichnet werden.

Diese beiden Laufbahnringe 66, 67 liegen entlang der Unterteilungsebene 62 flächig aneinander an. Um die beiden Ringe 66, 67 leicht gegeneinander zentrieren zu können, ist an einem von beiden - hier an dem unteren Laufbahnring 67 - eine rundum laufende, bundartige Erhöhung 68 vorgesehen. Diese bildet zusammen mit der der Unterteilungsebene 62 zugewandten Stirnseite des unteren Laufbahnrings 67 eine Kehle, die mit einer rundum laufenden Kante an dem jeweils anderen Ring - hier an dem oberen Laufbahnring 66 - zusammenwirkt, indem sie diese aufnimmt und dabei für eine konzentrische Ausrichtung beider Ringe 66, 67 sorgt.

Die Vereinigung der beiden Ringe 66, 67 des betreffenden Anschlußelements 13 erfolgt mittels Schrauben, welche jeweils zwei miteinander fluchtende, zu der Drehachse der Drehverbindung 1 etwa parallele Bohrungen 69, 70 in beiden Ringen 66, 67 durchgreift. Vorzugsweise sind diese Bohrungen 69, 70 als Durchgangsbohrung ausgebildet, jedoch könnten die Bohrungen 69, 70 in einem Laufbahnring 66, 67 auch als mit Innengewinde versehene Sacklochbohrungen ausgebildet sein. Bevorzugt dienen die durch die Bohrungen 66, 67 hindurch gesteckten Schrauben gleichzeitig auch zur Verbindung des betreffenden Anschlußelements 13 mit dem betreffenden Anlagen- oder Maschinenteil oder Fundament dienen.

Damit entlang der Unterteilungsebene 62 keine Feuchtigkeit in die Drehverbindung 1 oder gar in das Gezeitenkraftwerk 2 eindringen kann, sind die jene Unterteilungsebene 62 durchsetzenden Bohrungen 69, 70 abgedichtet. Hierzu dienen Dichtungsringe 71, welche zwischen den beiden, entlang der Unterteilungsebene 62 zusammen treffenden Stirnflächen verlaufen und bevorzugt in je eine nutförmige Vertiefung 72 in einer dieser Stirnseiten eingelegt sind. Bevorzugt ist jedes Paar miteinander fluchtender Bohrungen 66, 67 von einem derartigen Dichtungsring 71 umgeben. Es wäre allerdings auch möglich, stattdessen nur zwei Dichtungsringe zu verwenden, welche an einem dem betreffenden Kranz von Bohrungen 69, 70 einbeschriebenen Kreis einerseits sowie an einem dem betreffenden Kranz von Bohrungen umbeschriebenen Kreis andererseits entlang laufen.

Auch die Mündungen der Bohrungen 69 in dem oberen Laufbahnring 66 sind von ringförmig verlaufenden, nutförmigen Vertiefungen 73 umgeben, worin Dichtungsringe einlegbar sind. Zu ähnlichen Zwecken können die Befestigungsbohrungen 43 in der Anschlußfläche 17 des zweiten Anschlußelements 14 von ringförmig verlaufenden, nutförmigen Vertiefungen 74 umgeben sein, worin Dichtungsringe einlegbar sind.

Zur Abdichtung gegenüber dem Innenraum der Nabe 11 dient schließlich eine weitere Dichtung 75 im Mündungsbereich des Spaltes 15 jenseits des Lagerbereichs 20.

**Patentansprüche**

**1.** Drehverbindung (1) für Unterwasserbetrieb mit

einem ersten ringförmigen Anschlusselement (13) und mit einem zweiten, ebenfalls ringförmigen Anschlusselement (14), welches konzentrisch zu dem ersten Anschlusselement (13) angeordnet und diesem gegenüber verdrehbar ist, ferner mit einem zwischen den beiden Anschlusselementen (13, 14) angeordneten Ringspalt (15)

sowie mit wenigstens einer Reihe von entlang von je einer Laufbahn (34, 35, 36; 63, 64, 65) an dem ersten und an dem zweiten Anschlusselement (13, 14) abrollenden Wälzkörpern (37, 38, 39),
wobei zur Abdichtung des Ringspalts (15) eine Dichtungseinrichtung (21) vorgesehen ist mit wenigstens einem Dichtungsring (22), der an dem ersten Anschlusselement (13) der Drehverbindung (1) festgelegt ist und eine rundumlaufende Dichtlippe (23) oder -fläche aufweist, die an einer Anlauffläche (30) entlang läuft,
wobei das zweite Anschlusselement (14) der Drehverbindung (1) entlang einer Ebene (31) unterteilt ist in einen Laufbahnring (40) mit wenigstens einer Laufbahn (34, 35, 36) und in einen Anlaufring (33) mit der Anlauffläche (30) für den wenigstens einen Dichtungsring (22), wobei

a) der Anlaufring (33) lösbar an dem Laufbahnring (40) angeflanscht ist und einen an dem Laufbahnring (40) flächig anliegenden Oberflächenbereich aufweist, und wobei
b) der Laufbahnring (40) des zweiten Anschlusselements (14) der Drehverbindung (1) als Nasenring ausgebildet ist mit einem dem Ringspalt (15) zugekehrten, rundum laufenden Bund (61), an welchem die eine oder mehrere Laufbahnen (34, 35, 36) für die daran entlang rollenden Wälzkörper (37, 38, 39) angeordnet sind,

der Anlaufring (33) aus einem anderen Material als der Laufbahnring (40) besteht,
**dadurch gekennzeichnet, dass**
der Anlaufring (33) aus einem rostfreiem Edelstahl besteht, der eine spontane Passivierungsschicht ausbildet.

2. Anlage (2) zur Energiegewinnung aus Wasserkraft, umfassend wenigstens eine Drehverbindung (1) für Unterwasserbetrieb nach Anspruch 1.

3. Drehverbindung oder Anlage nach einem der vorhergehenden Ansprüche, **dadurch gekennzeichnet, dass** der Anlaufring (33) mehrere, kranzförmig über seinen Umfang verteilte Durchgangsbohrungen (43) aufweist zum Hindurchstecken von Befestigungsschrauben, und/oder dass der Laufbahnring (40) mehrere, kranzförmig über seinen Umfang verteilte Bohrungen, insbesondere Sacklochbohrungen (44) mit Innengewinde, aufweist zum Hineinstecken oder -schrauben von Befestigungsschrauben.

4. Drehverbindung oder Anlage nach einem der vorhergehenden Ansprüche, **dadurch gekennzeichnet, dass** zwischen dem Anlaufring (33) und dem Laufbahnring (40) eine oder mehrere Dichtungen vorgesehen sind, insbesondere Dichtringe (45), wobei vorzugsweise wenigstens ein Dichtring (45) wenigstens eine Befestigungsbohrung (43,44) umgibt.

5. Drehverbindung oder Anlage nach einem der vorhergehenden Ansprüche, **dadurch gekennzeichnet, dass** die Anlauffläche (30) des Anlaufrings (33) gehärtet ist, vorzugsweise oberflächengehärtet, und/oder an einem konkav oder konvex gewölbten, insbesondere zylindermantelförmigen Oberflächenbereich des Anlaufrings (33) angeordnet ist.

6. Drehverbindung oder Anlage nach einem der vorhergehenden Ansprüche, **dadurch gekennzeichnet, dass** der Anlaufring (33) und der Laufbahnring (40) in axialer Richtung hintereinander angeordnet sind.

7. Drehverbindung oder Anlage nach einem der vorhergehenden Ansprüche, **dadurch gekennzeichnet, dass** das erste Anschlusselement (13) den Anlaufring (33) und den Laufbahnring (40) in axialer Richtung im Wesentlichen überdeckt und/oder außen umgibt.

8. Drehverbindung oder Anlage nach einem der vorhergehenden Ansprüche, **dadurch gekennzeichnet, dass** der wenigstens eine Dichtungsring (22) in einer Auskehlung (26) des ersten Anschlusselements (13) aufgenommen ist und vorzugsweise darin in axialer Richtung durch einen Klemmring (27) festgeklemmt ist, wobei der Klemmring (27) bevorzugt an einer Stirnseite (16) des ersten Anschlusselements (13) festgeschraubt ist, insbesondere an der die Auskehlung (26) aufweisenden Stirnseite (16) des ersten Anschlusselements (13), und wobei gegebenenfalls der Klemmring (27) die Auskehlung (26) des ersten Anschlusselements (13) in radialer Richtung überdeckt.

9. Drehverbindung oder Anlage nach einem der vorhergehenden Ansprüche, **dadurch gekennzeichnet, dass** der Querschnitt des wenigstens einen Dichtungsrings (22) zwei Schenkel (24,47) aufweist, welche an einem Ende direkt oder über einen Steg (48) miteinander verbunden sind, wobei vorzugsweise der wenigstens eine Dichtungsring (22) derart angeordnet ist, dass der Schlitz (49) bzw. die Einkerbung zwischen den beiden Querschnitts- Schenkeln (24,47) zu der äußeren Seite bzw. dem Wasser (3) hin offen ist.

10. Drehverbindung oder Anlage nach Anspruch 9, **dadurch gekennzeichnet, dass** ein erster Querschnitts-Schenkel (24) des wenigstens einen Dichtungsrings (22) eine etwa rechteckige Gestalt aufweist und zur Verankerung an dem ersten Anschlusselement (13), insbesondere in dessen Auskehlung (26), dient, und/oder dass ein zweiter Querschnitts-Schenkel (47)des wenigstens einen Dichtungsrings (22) an seiner dem ersten Querschnitts-Schenkel (24) abgewandten Seite eine Dichtlippe (23) oder -fläche aufweist, vorzugsweise an oder in der Nähe seines freien Endes, wobei gegebenenfalls in dem schlitzförmigen Bereich (49) zwischen den beiden Querschnitts-Schenkeln (24,47) ein rundum laufender Spanndraht (51) angeordnet ist, der die Rückseite des die Dichtlippe (23) oder -fläche aufweisenden Querschnitts-Schenkels (47) umgreift und dessen Dichtlippe (23) oder -fläche fest gegen die Anlauffläche (30) des Anlaufrings (33) presst.

**11.** Drehverbindung oder Anlage nach einem der vorhergehenden Ansprüche, **dadurch gekennzeichnet, dass** mehrere Dichtungsringe (22) vorgesehen sind, wobei zwei benachbarte Dichtungsringe (22) durch je ein vorzugsweise ringförmiges, insbesondere scheibenförmiges Abstandselement (52) voneinander getrennt sind, wobei ein Abstandselement (52) vorzugsweise aus einem steifen Material besteht, vorzugsweise aus Metall, Keramik oder Kunststoff.

**12.** Drehverbindung oder Anlage nach Anspruch 112, **dadurch gekennzeichnet, dass** ein Abstandselement (52) wenigstens einen, etwa in radialer Richtung verlaufenden Kanal (54) aufweist, bspw. wenigstens eine Radialbohrung, wobei dass ein Abstandselement (52) gegebenenfalls an seinem dem ersten Anschlusselement (13) zugekehrten Umfang einen rundum laufenden Kanal, insbesondere eine rundum laufende Nut, aufweist.

**13.** Drehverbindung oder Anlage nach einem der Ansprüche 11 oder 12, **dadurch gekennzeichnet, dass** das erste Anschlusselement (13) auf Höhe eines oder mehrerer Abstandselemente (52) je einen Schmierkanal (54) aufweist.

**14.** Drehverbindung oder Anlage nach einem der vorhergehenden Ansprüche, **dadurch gekennzeichnet, dass** das dem Nasenring (40) gegenüber liegende Anschlusselement (13) unterteilt ist in wenigstens zwei Laufbahnringe (66,67), welche gemeinsam den rundum laufenden Bund (61) des Nasenrings (40) umgreifen.

**Claims**

**1.** A rotary connection (1) for underwater operation, having

a first ring-shaped connecting element (13) and a second, likewise ring-shaped connecting element (14) that is situated concentrically with respect to the first connecting element (13) and rotatable relative to same,
and having an annular gap (15) situated between the two connecting elements (13, 14),
with at least one row of rolling elements (37, 38, 39) that roll along one raceway (34, 35, 36; 63, 64, 65) each on the first connecting element and on the second connecting element (13, 14),
wherein for sealing the annular gap (15), a sealing device (21) is provided, having at least one sealing ring (22) that is secured to the first connecting element (13) of the rotary connection (1) and that has a circumferential sealing lip (23) or sealing surface that runs along a run-up surface (30), wherein the second connecting element (14) of the rotary connection (1) is divided, along a plane (31), into a raceway ring (40) having at least one raceway (34, 35, 36), and a thrust ring (33) having the run-up surface (30) for the at least one sealing ring (22), wherein

a) the thrust ring (33) is detachably flange-mounted to the raceway ring (40) and has a surface area that lies flat against the raceway ring (40), and
b) the raceway ring (40) of the second connecting element (14) of the rotary connection (1) is designed as a nose ring having a circumferential collar (61) that faces the annular gap (15), and on which the one or more raceways (34, 35, 36) for the rolling elements (37, 38, 39) that roll along same are situated, the thrust ring (33) consists of a material other than the raceway ring (40),
**characterized in that**
the thrust ring (33) consists of a stainless steel which forms a spontaneous passivation layer.

**2.** A system (2) for generating energy from water power, comprising at least one rotary connection (1) for underwater operation according to Claim 1.

**3.** The rotary connection or system according to one of the preceding claims, **characterized in that** the thrust ring (33) has multiple annular through holes (43) distributed over its circumference for inserting fastening screws, and/or that the raceway ring (40) has multiple annular holes, in particular blind holes (44) having an internal thread, over its circumference for inserting or screwing in fastening screws.

**4.** The rotary connection or system according to one of the preceding claims, **characterized in that** one or more seals (in particular sealing rings (45)) are provided between the thrust ring (33) and the raceway ring (40), wherein preferably at least one sealing ring (45) encloses at least one fastening hole (43, 44).

**5.** The rotary connection or system according to one of the preceding claims, **characterized in that** the run-up surface (30) of the thrust ring (33) is hardened, preferably surface-hardened, and/or is situated on a concavely or convexly curved, in particular cylinder shell-shaped, surface region of the thrust ring (33).

**6.** The rotary connection or system according to one of the preceding claims, **characterized in that** the thrust ring (33) and the raceway ring (40) are situated in succession in the axial direction.

**7.** The rotary connection or system according to one of the preceding claims, **characterized in that** the first connecting element (13) essentially covers and/or externally encloses the thrust ring (33) and the raceway ring (40) in the axial direction.

**8.** The rotary connection or system according to one of the preceding claims, **characterized in that** the at least one sealing ring (22) is accommodated in a recess (26) in the first connecting element (13), and is preferably clamped therein in the axial direction by a clamping ring (27), wherein the clamping ring (27) is preferably screwed down on an end-face side (16) of the first connecting element (13), in particular on the end-face side (16) of the first connecting element (13) that has the recess (26), and wherein the clamping ring (27) optionally covers the recess (26) in the first connecting element (13) in the radial direction.

**9.** The rotary connection or system according to one of the preceding claims, **characterized in that** the cross section of the at least one sealing ring (22) has two legs (24, 47), which at one end are connected to one another, directly or via a web (48), wherein the at least one sealing ring (22) is preferably selected in such a way that the slot (49) or the indentation between the two cross-sectional legs (24, 47) is open toward the outer side, i.e., toward the water (3).

**10.** The rotary connection or system according to Claim 9, **characterized in that** a first cross-sectional leg (24) of the at least one sealing ring (22) has an approximately rectangular shape and is used for anchoring to the first connecting element (13), in particular in the recess (26) therein, and/or that a second cross-sectional leg (47) of the at least one sealing ring (22) has a sealing lip (23) or sealing surface on its side facing away from the first cross-sectional leg (24), preferably at or near the free end of the second cross-sectional leg, wherein a circumferential tension wire (51) that encloses the rear side of the cross-sectional leg (47) that has the sealing lip (23) or sealing surface and presses its sealing lip (23) or sealing surface tightly against the run-up surface (30) of the thrust ring (33) is optionally situated in the slotted area (49) between the two cross-sectional legs (24, 47).

**11.** The rotary connection or system according to one of the preceding claims, **characterized in that** multiple sealing rings (22) are provided, wherein two adjacent sealing rings (22) are each separated from one another by a preferably ring-shaped, in particular disk-shaped, spacer element (52), wherein a spacer element (52) is preferably made of a rigid material, preferably metal, ceramic, or plastic.

**12.** The rotary connection or system according to Claim 11, **characterized in that** a spacer element (52) has at least one channel (54), for example at least one radial borehole, that extends approximately in the radial direction, wherein the spacer element (52) optionally has a circumferential channel, in particular a circumferential groove, on its circumference facing the first connecting element (13).

**13.** The rotary connection or system according to one of Claims 11 or 12, **characterized in that** the first connecting element (13) has one lubrication channel (54) each at the level of one or more spacer elements (52).

**14.** The rotary connection or system according to one of the preceding claims, **characterized in that** the connecting element (13) situated opposite from the nose ring (40) is divided into at least two raceway rings (66, 67), which together enclose the circumferential collar (61) of the nose ring (40).

**Revendications**

**1.** Raccord rotatif (1) destiné à fonctionner sous l'eau, le raccord rotatif comprenant

un premier élément de raccordement annulaire (13) et un deuxième élément de raccordement (14), également annulaire, qui est disposé concentriquement au premier élément de raccordement (13) et pouvant tourner par rapport à celui-ci, et
comprenant en outre un espace annulaire (15) situé entre les deux éléments de raccordement (13, 14)
ainsi qu'au moins une rangée de corps de rouleau (37, 38, 39) qui roulent chacun le long d'une voie de roulement (34, 35, 36 ; 63, 64, 65) au niveau du premier élément de raccordement et du deuxième élément de raccordement (13, 14), un dispositif d'étanchéité (21) est prévu pour étanchéifier l'espace annulaire (15) et comportant au moins une bague d'étanchéité (22) qui est fixée au premier élément de raccordement (13) du raccord rotatif (1) et qui comporte une lèvre d'étanchéité (23) ou surface d'étanchéité périphérique qui s'étend le long d'une surface d'appui (30), où le deuxième élément de raccordement (14) du raccord rotatif (1) est divisé le long d'un plan (31) en une bague à voies de roulement (40) comportant au moins une voie de roulement (34, 35, 36) et en une bague d'appui (33) pourvue de la surface d'appui (30) destinée à l'au moins une bague d'étanchéité (22),

a) la bague d'appui (33) étant bridée de manière amovible sur la bague à voies de roulement (40) et présente une zone de surface s'appuyant à plat sur la bague à voies de roulement (40), et

b) la bague à voies de roulement (40) du deuxième élément de raccordement (14) du raccord rotatif (1) étant conçue comme une bague à talon pourvue d'un collet périphérique (61) qui est dirigé vers la fente annulaire (15) et sur lequel est disposée l'au moins une voie de roulement (34, 35, 36) destinée aux corps de rouleau (37, 38, 39) qui roulent le long de celle-ci

la bague d'appui (33) est constituée d'un matériau différent de celui de la bague à voies de roulement (40),

**caractérisé en ce que**
la bague d'appui (33) est constituée d'un acier inoxydable qui forme une couche de passivation spontanée.

2. Système (2) destiné à générer de l'énergie à partir de la force hydraulique, le système comprenant au moins un raccord rotatif (1) destiné à fonctionner sous l'eau selon la revendication 1.

3. Raccord rotatif ou système selon l'une des revendications précédentes, **caractérisé en ce que** la bague d'appui (33) comporte une pluralité de trous traversants annulaires (43) répartis en couronne sur son pourtour et destinés à l'insertion de vis de fixation, et/ou **en ce que** la bague à voies de roulement (40) comporte une pluralité de trous, notamment de trous borgnes (44), répartis en couronne sur son pourtour, et destinés à l'insertion ou au vissage de vis de fixation.

4. Raccord rotatif ou système selon l'une des revendications précédentes, **caractérisé en ce qu'**au moins un joints d'étanchéité, en particulier des bagues d'étanchéité (45)) sont prévus entre la bague d'appui (33) et la bague à voies de roulement (40), de préférence au moins une bague d'étanchéité (45) entourant au moins un trou de fixation (43, 44).

5. Raccord rotatif ou système selon l'une des revendications précédentes, **caractérisé en ce que** la surface d'appui (30) de la bague d'appui (33) est durcie, de préférence durcie en surface, et/ou est disposée au niveau d'une région de surface, incurvée concave ou convexe, notamment en forme d'enveloppe cylindrique, de la bague d'appui (33).

6. Raccord rotatif ou système selon l'une des revendications précédentes, **caractérisé en ce que** la bague d'appui (33) et la bague à voies de roulement (40) sont disposées l'une derrière l'autre dans la direction axiale.

7. Raccord rotatif ou système selon l'une des revendications précédentes, **caractérisé en ce que** le premier élément de raccordement (13) recouvre, et/ou entoure à l'extérieur, sensiblement la bague d'appui (33) et la bague à voies de roulement (40) dans la direction axiale.

8. Raccord rotatif ou système selon l'une des revendications précédentes, **caractérisé en ce que** l'au moins une bague d'étanchéité (22) est logée dans une gorge (26) du premier élément de raccordement (13) et est de préférence serrée, à l'intérieur dans la direction axiale, par le biais d'une bague de serrage (27), la bague de serrage (27) étant de préférence vissée sur une face frontale (16) du premier élément de raccordement (13), en particulier sur le côté frontal (16), pourvu de la gorge (26), du premier élément de raccordement (13) et la bague de serrage (27) recouvrant éventuellement la gorge (26) du premier élément de raccordement (13) dans la direction radiale.

9. Raccord rotatif ou système selon l'une des revendications précédentes, **caractérisé en ce que** la section transversale de l'au moins une bague d'étanchéité (22) comporte deux branches (24, 47) qui sont reliées l'une à l'autre, à une extrémité, directement ou par l'intermédiaire d'une nervure (48), l'au moins une bague d'étanchéité (22) est de préférence disposée de telle sorte que la fente (49) ou la gorge entre les deux branches en coupe transversale (24, 47) soit ouverte vers le côté extérieur, c'est-à-dire vers l'eau (3).

10. Raccord rotatif ou système selon la revendication 9, **caractérisé en ce qu'**une première branche en coupe transversale (24) de l'au moins une bague d'étanchéité (22) a une forme approximativement rectangulaire et sert à pour l'ancrage au premier élément de raccordement (13), en particulier dans la gorge (26) de celui-ci, et/ou **en ce qu'**une deuxième branche en coupe transversale (47) de l'au moins une bague d'étanchéité (22) comporte une lèvre d'étanchéité (23) ou une surface d'étanchéité sur son côté opposé à la première branche en coupe transversale (24), de préférence au niveau ou à proximité de l'extrémité libre de la deuxième branche transversale, un câble de tension périphérique (51) étant éventuellement disposé dans la zone (49) en forme de fente située entre les deux branches en coupe transversale (24, 47), le câble de tension s'engageant autour du côté arrière de la branche en coupe transversale qui comporte la lèvre d'étanchéité (23) ou la surface d'étanchéité et ladite lèvre d'étanchéité (23) ou surface d'étanchéité pressant fermement contre la surface d'appui (30) de la bague d'appui (33).

**11.** Raccord rotative ou système selon l'une des revendications précédentes, **caractérisé en ce qu'**une pluralité de bagues d'étanchéité (22) sont prévues, deux bagues d'étanchéité adjacentes (22) étant à chaque fois séparées par un élément d'écartement (52) annulaire, notamment discoïdal (52), un élément d'écartement (52) étant de préférence en un matériau rigide, de préférence en métal, en céramique ou en matière synthétique.

**12.** Raccord rotatif ou système selon la revendication 11, **caractérisé en ce qu'**un élément d'écartement (52) comporte au moins un canal (54) s'étendant approximativement dans la direction radiale ou au moins un alésage radial, où l'élément d'écartement (52) comportant éventuellement sur sa périphérie tournée vers le premier élément d'écartement (13) un canal périphérique, notamment une rainure périphérique.

**13.** Raccord rotatif ou système selon l'une des revendications 11 ou 12, **caractérisé en ce que** le premier élément de raccordement (13) comporte au niveau d'au moins un élément d'écartement (52) un conduit de lubrification (54).

**14.** Raccord rotatif ou système selon l'une des revendications précédentes, **caractérisé en ce que** l'élément de raccordement (13), opposé à la bague à talon (40), est divisée en au moins deux bagues à voies de roulement (66, 67) qui entoure conjointement le collier périphérique (61) de la bague à talon (40).

Fig.1

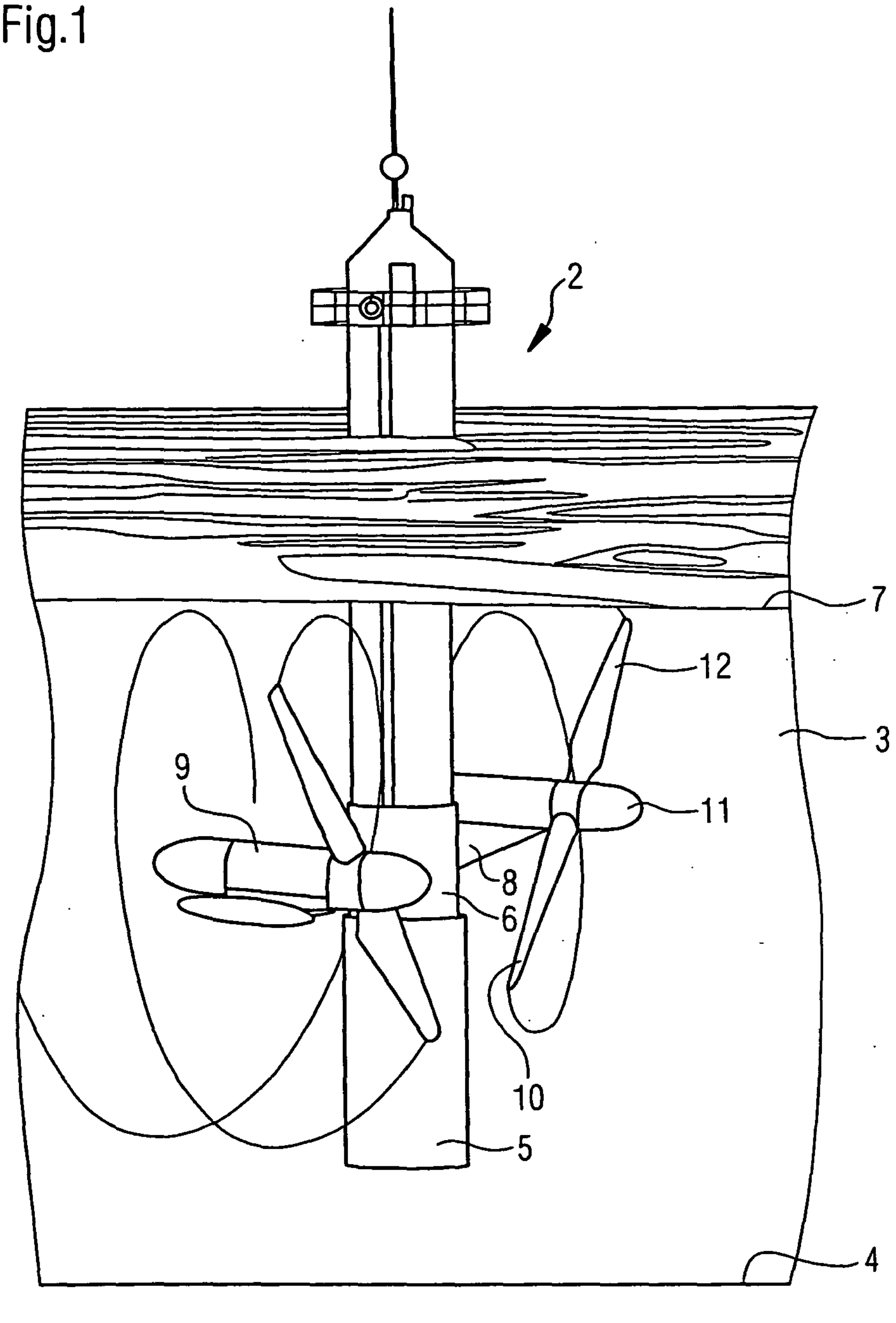

Fig.2

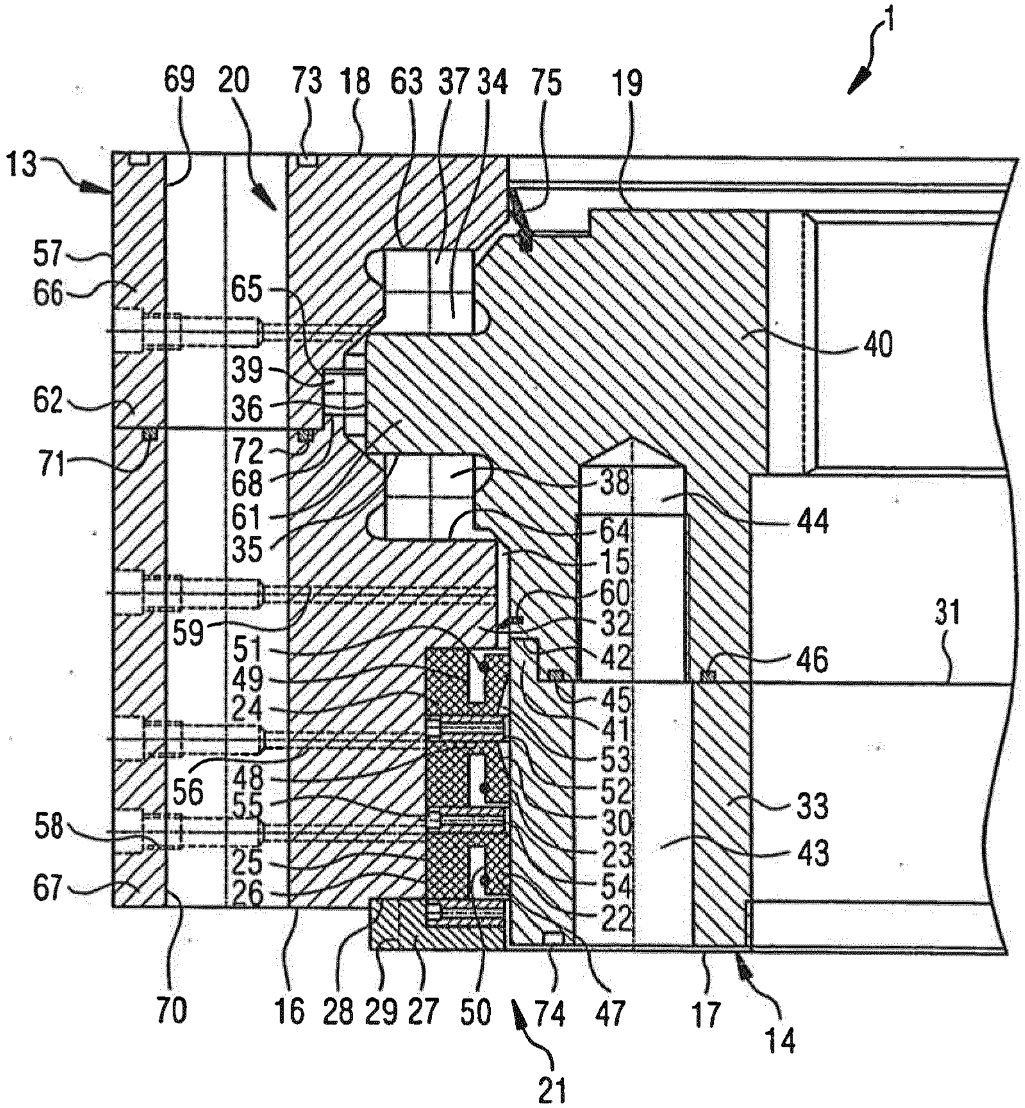
1
69 20 73 18 63 37 34 75 19
13
57
66
65
40
39
36
62
71
72
68
61
35
38
44
64
15
60
59
32
51
42
46
31
49
45
24
41
53
56
48
52
55
30
58
23
25
43
33
54
67
26
22
70 16 28 29 27 50 74 47 17 14
21

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1223359 A1
- US 4798481 A
- US 20090324153 A1
- DE 4142313 A1
- WO 2009049755 A1
- JP 2008032148 A